# EUROPÄISCHE PATENTSCHRIFT

(11) **EP 1 787 072 B1**
(45) Veröffentlichungstag und Bekanntmachung des Hinweises auf die Patenterteilung: **31.08.2016**
(21) Anmeldenummer: 05774599.4
(22) Anmeldetag: 05.08.2005
(51) Int. Cl.: F25B 41/06, F25B 9/00

(54) **KÄLTEKREISLAUF UND VERFAHREN ZUM BETREIBEN EINES KÄLTEKREISLAUFES**
REFRIGERATION CYCLE AND METHOD FOR OPERATING SUCH A REFRIGERATION CYCLE
CIRCUIT DE RÉFRIGÉRATION ET PROCÉDÉ PERMETTANT DE FAIRE FONCTIONNER UN CIRCUIT DE RÉFRIGÉRATION

(30) Priorität: 09.08.2004 DE 102004038641
(43) Veröffentlichungstag der Anmeldung: 23.05.2007
(73) Patentinhaber: Carrier Corporation, Farmington, CT 06034 (US)
(72) Erfinder: GERNEMANN, Andreas, 53332 Bornheim (DE); HEINBOKEL, Bernd, 50999 Köln (DE)
(74) Vertreter: Klunker . Schmitt-Nilson . Hirsch
(86) Internationale Anmeldenummer: PCT/EP2005/008535
(87) Internationale Veröffentlichungsnummer: WO 2006/015820

(56) Entgegenhaltungen:
- EP-A- 0 779 482
- WO-A-02/057695
- WO-A-03/019089
- DE-A1- 4 001 525
- DE-A1- 4 238 531
- DE-A1- 19 522 884
- FR-A- 2 738 331
- GB-A- 1 486 725
- US-A- 1 555 075
- US-A1- 2003 000 235
- PATENT ABSTRACTS OF JAPAN Bd. 2000, Nr. 21, 3. August 2001 (2001-08-03) -& JP 2001 116398 A (ZEXEL VALEO CLIMATE CONTROL CORP), 27. April 2001 (2001-04-27)
- PATENT ABSTRACTS OF JAPAN Bd. 2000, Nr. 21, 3. August 2001 (2001-08-03) -& JP 2001 116400 A (ZEXEL VALEO CLIMATE CONTROL CORP), 27. April 2001 (2001-04-27)
- PATENT ABSTRACTS OF JAPAN Bd. 2000, Nr. 21, 3. August 2001 (2001-08-03) -& JP 2001 116399 A (ZEXEL VALEO CLIMATE CONTROL CORP), 27. April 2001 (2001-04-27)
- PATENT ABSTRACTS OF JAPAN Bd. 015, Nr. 497 (M-1192), 16. Dezember 1991 (1991-12-16) -& JP 03 217771 A (SANYO ELECTRIC CO LTD), 25. September 1991 (1991-09-25)
- PATENT ABSTRACTS OF JAPAN Bd. 017, Nr. 362 (M-1441), 8. Juli 1993 (1993-07-08) -& JP 05 052429 A (HITACHI LTD), 2. März 1993 (1993-03-02)

## Beschreibung

Die Erfindung betrifft einen Kältekreislauf, in dem ein ein- oder mehrkomponentiges Kältemittel zirkuliert, aufweisend wenigstens eine Entspannungsvorrichtung.

Ferner betrifft die Erfindung ein Verfahren zum Betreiben eines Kältekreislaufes.

Gattungsgemäße Kältekreisläufe sind hinlänglich bekannt. Sie werden beispielsweise in Kälteanlagen, so genannten Verbundkälteanlagen, wie sie in Supermärkten zur Anwendung kommen, realisiert. Verbundkälteanlagen versorgen dort im Allgemeinen eine Vielzahl von Kälteverbrauchern, wie etwa Kühlräume, Kühl- und Tiefkühlmöbel. Zu diesem Zweck zirkuliert in ihnen ein ein- oder mehrkomponentiges Kältemittel bzw. Kältemittelgemisch. Dieses wird - vorzugsweise gegen Außenluft - verflüssigt, über einen optional vorzusehenden Kältemittel-Sammelbehälter einem oder mehreren Kälteverbrauchern, denen Einspritzventile vorgeschaltet sind, zugeführt und in diesen verdampft. Mittels einer ein- oder mehrstufigen Verdichtereinheit wird das verdampfte Kältemittel anschließend wieder auf den gewünschten Hochdruck des Kältekreislaufes verdichtet und erneut der bereits erwähnten Verflüssigung zugeführt.

Neuere (Verbund)Kälteanlagen bzw. Kältekreisläufe, in denen als Kältemittel Kohlendioxid zur Anwendung kommt und die zumindest zeitweilig über- bzw. transkritisch betrieben werden, weisen ein Hochdruck-Regelventil auf. Dieses dient dazu, dass Kältemittel von einem Hochdruck, der zwischen 45 bis 120 bar beträgt, auf einen Zwischendruck von 30 bis 40 bar zu entspannen. Als Hochdruck-Regelventile kommen bisher entweder Motorregelventile oder pneumatische Regelventile zur stetigen Regelung zur Anwendung.

Tritt jedoch bei einem derartigen Ventil ein wie auch immer gearteter Defekt auf, muss der gesamte Kältekreislauf außer Betrieb genommen werden. Daraus resultieren eine Vielzahl offensichtlicher Nachteile.

JP 03-217771 A zeigt einen Kühlkreislauf mit einem elektronischen Entspannungsventil und einem Schaltventil, das parallel zu dem elektronischen Entspannungsventil angeordnet ist. Das Schaltventil wird geöffnet, wenn die Menge zirkulierenden Kühlmittels die Kapazität des elektronischen Entspannungsventils übersteigt, und das Schaltventil wird geschlossen, wenn die Menge zirkulierenden Kühlmittels kleiner als die Kapazität des elektronischen Entspannungsventils ist.

EP 0 976 991 A2 zeigt einen Kühlkreis, in dem Kohlendioxid als Kühlmittel verwendet wird, wobei der Kühlkreis ein erstes Expansionsmittel, ein zweites Expansionsmittel und ein Mittel zur Gas-Flüssigkeits-Trennung aufweist, welches zwischen dem ersten und dem zweiten Expansionsmittel angeordnet ist, so dass der Druck von gasförmigem Kühlmittel, welches durch einen Kompressor auf einen hohen Druck komprimiert worden und durch einen Wärmetauscher gekühlt worden ist, durch Expansion im ersten Expansionsmittel auf ein mittleres Druckniveau in einem zweiphasigen Gas-Flüssigkeits-Bereich reduziert wird. Mit Hilfe des Gas-Flüssigkeits-Trenners wird das Kühlmittel in eine Gasphase und in eine Flüssigkeitsphase getrennt. Nur die Flüssigkeitsphase wird durch das zweite Expansionsmittel weiter expandiert, während die Gäsphase des Kühlmittels bei mittlerem Druck dem Kompressor zugeführt wird.

Aufgabe der vorliegenden Erfindung ist es, einen gattungsgemäßen Kältekreislauf sowie ein gattungsgemäßes Verfahren zum Betreiben eines Kältekreislaufes anzugeben, der bzw. das die vorgenannten Nachteile vermeidet.

Der erfindungsgemäße Kältekreislauf zeichnet sich dadurch aus, dass die Entspannungsvorrichtung als wenigstens zwei parallel geschaltete Ventile ausgebildet ist.

Gemäß einer vorteilhaften Ausgestaltung des erfindungsgemäßen Kältekreislaufes sind die verwendeten Ventile stetig regelnd und/oder nicht stetig regelnd ausgebildet.

Verfahrensseitig wird die gestellte Aufgabe dadurch gelöst, dass im Falle des Defektes eines der parallel geschalteten Ventile dieses außer Betrieb genommen wird und das oder wenigstens eines der weiteren Ventile den Regelbetrieb des Kältekreislaufes weiterhin gewährleistet.

Den erfindungsgemäßen Kältekreislauf weiterbildend wird ferner vorgeschlagen, dass wenigstens zwei der parallel geschalteten Ventile unterschiedliche Kv-Werte bzw. Druckverlustbeiwerte aufweisen.

Besonders vorteilhaft ist es, wenn - entsprechend einer weiteren vorteilhaften Ausgestaltung des erfindungsgemäßen Kältekreislaufes - wenigstens eines der Ventile ein Magnetventil ist.

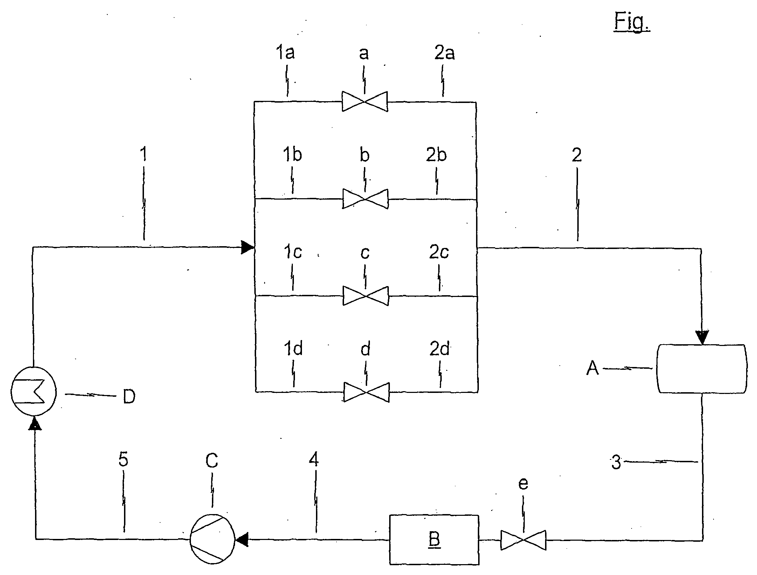

Der erfindungsgemäße Kältekreislauf, das erfindungsgemäße Verfahren zum Betreiben des Kältekreislaufes sowie weitere Ausgestaltungen desselben seien nachfolgend anhand des in der Figur dargestellten Ausführungsbeispieles näher erläutert.

Die Figur zeigt in schematisierter Form einen herkömmlichen Kältekreislauf, wobei über die Leitung 1 ein Kältemittelstrom, der einen Druck von beispielsweise 100 bar aufweist, einem Ventilblock, bestehend aus den parallel geschalteten bzw. angeordneten Magnetventilen a, b, c und d zugeführt wird. Nunmehr erfolgt - bei geschlossenen oder offenen Magnetventilen b, c und d - im Magnetventil a eine Entspannung des Kältemittels auf einen (Zwischen)Druck von 30 bis 50 bar; dazu wird das Kältemittel über den Leitungsabschnitt 1a dem Magnetventil a zugeführt, in diesem entspannt und anschließend über die Leitungen 2a und 2 einem dem Kälteverbraucher/Wärmetauscher B vorgeschalteten Kältemittel-Sammelbehälter A zugeführt. Aus dem Kältemittel-Sammelbehälter A wird das Kältemittel über die Leitung 3 dem Einspritzventil e des Kälteverbrauchers/Wärmetauschers B zugeführt, in diesem auf den gewünschten Verdampfungsdruck entspannt und im Kälteverbraucher/Wärmetauscher B verdampft. Der Kälteverbraucher/Wärmetauscher B sowie das ihm zugeordnete Einspritzventil e steht hierbei für einen oder mehrere, parallel angeordnete Kälteverbraucher/Wärmetauscher nebst zugehöriger Einspritzventile. Über die Leitung 4 wird das verdampfte Kältemittel durch die ein- oder mehrstufigen Verdichtereinheit C angesaugt, in dieser wieder auf den gewünschten Hochdruck des Kältekreislaufes verdichtet und sodann über die Leitung 5 einem Verflüssiger D zugeführt.

Kommt es nun in bzw. an dem Ventil a zu einem Defekt, so wird dieses außer Betrieb genommen und wenigstens eines der verbleibenden, nicht defekten Magnetventile b, c bzw. d gewährleistet den Regelbetrieb des Kältekreislaufes bzw. die Regelung des Hochdruckes.

Die verwendeten Magnetventile a bis d arbeiten vorzugsweise lediglich im Taktbetrieb (Auf/Zu), Pulsweiten-modulierend oder in einer Stufenschaltung. Auf die Verwendung störungsanfälliger, teurer, stetig regelnder Ventile kann nunmehr erfindungsgemäß verzichtet werden.

Den erfindungsgemäßen Kältekreislauf weiterbildend wird vorgeschlagen, dass die Magnetventile in einem gemeinsamen Ventilblock angeordnet sind bzw. sitzen.

Grundsätzlich können - entsprechend einer vorteilhaften Ausgestaltung des erfindungsgemäßen Kältekreislaufes - die verwendeten Ventile a bis d stetig regelnd und/oder nicht stetig regelnd ausgebildet sein.

Es können somit ausschließlich stetig regelnde oder ausschließlich nicht stetig regelnde aber auch sowohl stetig regelnde als auch nicht stetig regelnde Vventile zur Anwendung kommen bzw. miteinander kombiniert werden.

Kommen nicht stetig regelnde Magnetventile mit unterschiedlichen Kv-Werten zur Anwendung und werden diese miteinander kombiniert, können unterschiedliche Durchflussmengen realisiert werden.

## Patentansprüche

1. Kältekreislauf, in dem Kohlendioxid als Kältemittel zirkuliert, aufweisend wenigstens eine erste Entspannungsvorrichtung, um das Kältemittel von einem hohen Druck auf einen mittleren Druck zu entspannnen, und wenigstens eine zweite Entspannungsvorrichtung, um das Kältemittel von einem mittleren Druck auf einen Verdampfungsdruck zu entspannen;
wobei der Kältekreislauf ausgebildet ist, um über- oder transkritisch betrieben zu werden, **dadurch gekennzeichnet, dass**
die erste Entspannungsvorrichtung als wenigstens zwei parallel geschaltete Ventile (a, b, c, d) ausgebildet ist, so dass im Falle des Defekts eines der parallel geschalteten Ventile (a, b, c, d) dieses außer Betrieb nehmbar ist und das oder wenigstens eines der weiteren Ventile den Regelbetrieb des Kältekreislaufes weiterhin gewährleistet.

2. Kältekreislauf nach Anspruch 1, wobei die zweite Entspannungsvorrichtung ein Einspritzventil (e) eines Wärmetauschers (B) ist.

3. Kältekreislauf nach Anspruch 2, wobei die erste Entspannungsvorrichtung stromaufwärts des Einspritzventils (e) angeordnet ist.

4. Kältekreislauf nach Anspruch einem der vorangehenden Ansprüche, wobei die erste Entspannungseinrichtung stromaufwärts eines Kältemittel-Sammelbehälters (A) angeordnet ist.

5. Kältekreislauf nach einem der vorangehenden Ansprüche, wobei die wenigstens zwei parallel geschalteten Ventile (a, b, c, d) Hochdruckregelventile sind.

6. Kältekreislauf nach Anspruch 5, wobei die Hochdruckregelventile dazu ausgelegt sind, ein Kältemittel von einem Hochdruck, der zwischen 45 und 120 bar beträgt, auf einen Zwischendruck von zwischen 30 und 50 bar zu entspannen.

7. Kältekreislauf nach einem der vorangehenden Ansprüche, **dadurch gekennzeichnet, dass** die verwendeten Ventile (a, b, c, d) stetig regelnd und/oder nicht stetig regelnd ausgebildet sind.

8. Kältekreislauf nach einem der vorhergehenden Ansprüche, **dadurch gekennzeichnet, dass** wenigstens eines der Ventile (a, b, c, d) ein Magnetventil ist.

9. Kältekreislauf nach einem der vorangehenden Ansprüche, **dadurch gekennzeichnet, dass** zumindest zwei der Ventile Magnetventile sind und die Magnetventile in einem Ventilblock angeordnet sind.

10. Kältekreislauf nach einem der vorangehenden Ansprüche, wobei die wenigstens zwei parallel geschalteten Ventile (a, b, c, d) unterschiedliche Kv-Werte aufweisen.

11. Verfahren zum Betreiben eines Kältekreislaufes in dem Kohlendioxid als Kältemittel zirkuliert und der wenigstens eine erste Entspannungsvorrichtung, um das Kältemittel von einem hohen Druck auf einen mittleren Druck zu entspannnen, und wenigstens eine zweite Entspannungsvorrichtung, um das Kältemittel von einem mittleren Druck auf einen Verdampfungsdruck zu entspannen, aufweist, wobei der Kältekreislauf über- oder transkritisch betrieben wird,
**dadurch gekennzeichnet, dass** im Falle des Defektes eines der parallel geschalteten Ventile (a, b, c, d) dieses außer Betrieb genommen wird und das oder wenigstens eines der weiteren Ventile den Regelbetrieb des Kältekreislaufes gewährleistet.

12. Verfahren nach Anspruch 11, wobei durch Kombination von nicht-stetig regelnden Magnetventilen mit unterschiedlichen Kv-Werten unterschiedliche Durchflussmengen realisiert werden.

## Claims

1. A refrigeration cycle in which carbon dioxide circulates as refrigerant, comprising at least a first expansion device for expanding the refrigerant from a high pressure to a medium pressure, and at least a second expansion device for expanding the refrigerant from a medium pressure to an evaporation pressure; wherein the refrigeration cycle is configured to be operated supercritically or transcritically, **characterized in that**
the first expansion device is formed as at least two valves (a, b, c, d) connected in parallel, so that if one of the valves (a, b, c, d) connected in parallel is defective, it can be removed from operation, and the other valve, or at least one of the other valves, continue(s) to ensure normal operation of the refrigeration cycle.

2. The refrigeration cycle according to claim 1, wherein the second expansion device is an injection valve (e) of a heat exchanger (B).

3. The refrigeration cycle according to claim 2, wherein the first expansion device is positioned upstream of the injection valve (e).

4. The refrigeration cycle according to any of the preceding claims, wherein the first expansion device is positioned upstream of a refrigerant collecting container (A).

5. The refrigeration cycle according to any of the preceding claims, wherein the at least two valves (a, b, c, d) connected in parallel are high-pressure regulation valves.

6. The refrigeration cycle according to claim 5, wherein the high-pressure regulation valves are designed to expand a refrigerant from a high pressure of between 45 and 120 bar to an intermediate pressure of between 30 and 50 bar.

7. The refrigeration cycle according to any of the preceding claims, **characterized in that** the valves (a, b, c, d) that are used are formed as continuously regulating and/or non-continuously regulating.

8. The refrigeration cycle according to any of the preceding claims, **characterized in that** at least one of the valves (a, b, c, d) is a solenoid valve.

9. The refrigeration cycle according to any of the preceding claims, **characterized in that** at least two of the valves are solenoid valves and the solenoid valves are arranged in a valve block.

10. The refrigeration cycle according to any of the preceding claims, wherein the at least two valves (a, b, c, d) connected in parallel have different Kv values.

11. A method for operating a refrigeration cycle in which carbon dioxide circulates as refrigerant and which comprises at least a first expansion device for expanding the refrigerant from a high pressure to a medium pressure, and at least a second expansion device for expanding the refrigerant from a medium pressure to an evaporation pressure, wherein the refrigeration circuit is operated supercritically or transcritically,
**characterized in that**, if one of the valves (a, b, c, d) connected in parallel is defective, it is removed from operation, and the other valve, or at least one of the other valves, ensure(s) normal operation of the refrigeration cycle.

12. The method according to claim 11, wherein by combining non-continuously regulating solenoid valves having different Kv values, different flow rates can be achieved.

## Revendications

1. Circuit de réfrigération, dans lequel du dioxyde de carbone circule en tant que produit réfrigérant, présentant au moins un premier dispositif de détente afin de détendre le produit réfrigérant d'une pression élevée à une pression moyenne, et au moins un deuxième dispositif de détente afin de détendre le produit réfrigérant d'une pression moyenne à une pression d'évaporation ;
sachant que le circuit de réfrigération est réalisé afin de fonctionner de manière supercritique ou de manière transcritique, **caractérisé en ce que**
le premier dispositif de détente est réalisé sous la forme d'au moins deux vannes (a, b, c, d) montées en parallèle, de sorte que dans le cas de la défaillance d'une des vannes (a, b, c, d) montées en parallèle, cette dernière peut être mise hors service et que la vanne ou au moins une des autres vannes assure la poursuite du fonctionnement normal du circuit de réfrigération.

2. Circuit de réfrigération selon la revendication 1, sachant que le deuxième dispositif de détente est une vanne d'injection (e) d'un échangeur de chaleur (B).

3. Circuit de réfrigération selon la revendication 2, sachant que le premier dispositif de détente est disposé en amont de la vanne d'injection (e).

4. Circuit de réfrigération selon l'une quelconque des revendications précédentes, sachant que le premier
système de détente est disposé en amont d'un récipient collecteur de produit réfrigérant (A).

5. Circuit de réfrigération selon l'une quelconque des revendications précédentes, sachant que les au moins deux vannes de réfrigération (a, b, c, d) sont des vannes de régulation haute pression.

6. Circuit de réfrigération selon la revendication 5, sachant que les vannes de régulation haute pression sont configurées afin de détendre un produit réfrigérant d'une pression élevée, dont la valeur est comprise entre 45 et 120 bar, à une pression intermédiaire comprise entre 30 et 50 bar.

7. Circuit de réfrigération selon l'une quelconque des revendications précédentes, **caractérisé en ce que** les vannes (a, b, c, d) utilisées sont réalisées de manière à réguler en permanence et/ou de manière à ne pas réguler en permanence.

8. Circuit de réfrigération selon l'une quelconque des revendications précédentes, **caractérisé en ce qu'**au moins une des vannes (a, b, c, d) est une électrovanne.

9. Circuit de réfrigération selon l'une quelconque des revendications précédentes, **caractérisé en ce qu'**au moins deux des vannes sont des électrovannes, et **en ce que** les électrovannes sont disposées dans un bloc de vannes.

10. Circuit de réfrigération selon l'une quelconque des revendications précédentes, sachant que les au moins deux
vannes (a, b, c, d) montées en parallèle présentent des valeurs Kv différentes.

11. Procédé servant à faire fonctionner un circuit de réfrigération, dans lequel du dioxyde de carbone circule en tant que produit réfrigérant et qui présente au moins un premier dispositif de détente afin de détendre le produit réfrigérant d'une pression élevée à une pression moyenne et au moins un deuxième dispositif de détente afin de détendre le produit réfrigérant d'une pression moyenne à une pression d'évaporation, sachant que le circuit de réfrigération fonctionne de manière supercritique ou de manière transcritique,
**caractérisé en ce que** dans le cas de la défaillance d'une des vannes (a, b, c, d) montées en parallèle, cette dernière est mise hors service et la vanne ou au moins une des autres vannes assure le fonctionnement normal du circuit de réfrigération.

12. Procédé selon la revendication 11, sachant que différents débits sont réalisés par la combinaison d'électrovannes à régulation non permanente présentant différentes valeurs Kv.
